# EUROPEAN PATENT APPLICATION

(11) **EP 4 722 431 A1**
(43) Date of publication of application: **08.04.2026**
(21) Application number: 24815542.6
(22) Date of filing: 30.05.2024
(51) Int. Cl.: D01F 6/34, C04B 16/06, C04B 28/02

(54) **FIBER, CEMENT, CEMENT PASTE, MORTAR, AND CONCRETE CONTAINING SAID FIBER, AND METHOD FOR PRODUCING FIBER**

(30) Priority: 02.06.2023 JP 2023091660
(71) Applicant: Mitsubishi Chemical Corporation, Tokyo 100-8251 (JP)
(72) Inventor: ITO, Takuya, Tokyo 100-8251 (JP); KISHIMOTO, Yukihiro, Tokyo 100-8251 (JP); OKIHARA, Takumi, Okayama-shi, Okayama 700-8530 (JP)
(74) Representative: Hoffmann Eitle
(86) International application number: PCT/JP2024/019800
(87) International publication number: WO 2024/248061

(57) **Abstract**

Provided is the following fiber suitable as an additive to a cement paste and as a self-healing promoter for cracks in a cured cement body. A fiber containing an ethylene-vinyl alcohol copolymer including a structural unit represented by Formula (1) described below.

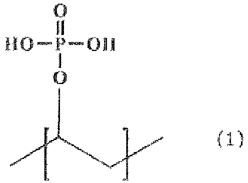

## Description

### Technical Field

The present disclosure relates to a fiber, and also to a cement, a cement paste, a mortar, and a concrete containing the fiber, and a method for producing the fiber.

### Background Art

In order to promote the self-healing of cracks generated in a cured cement body, a technique has been proposed in which synthetic fibers are mixed into a cement, with the synthetic fibers having a non-circular cross section with two or more protrusions and having at least a part of the fiber surface occupied by one or more resins selected from the group consisting of polyolefin-based resins and polyacetal resins (see Patent Literature 1 below).

An ethylene-vinyl alcohol copolymer (hereinafter may be abbreviated as "EVOH") is a polymer that is widely used as a gas barrier material, but EVOH applications are not limited thereto, and the use of EVOH as a material for cooling fibers and fibers for an alkaline secondary battery separator has been attempted (see Patent Literature 2 and 3 below).

### Citation List

### Patent Literature

Patent Literature 1: JP 2014-1129 A
Patent Literature 2: JP 2010-189829 A
Patent Literature 3: JP 2007-154402 A

### Summary

### Technical Problem

The present disclosure provides novel fibers which, when added to a cement paste, can promote the self-healing of cracks generated in a cured cement body obtained from the cement paste.

### Solution to Problem

The present disclosure includes the following aspects.
[1] A fiber containing an ethylene-vinyl alcohol copolymer including a structural unit represented by Formula (1) described below. 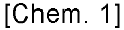 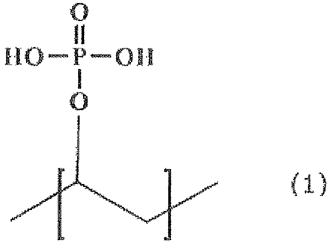
[2] A fiber containing a phosphorylated ethylene-vinyl alcohol copolymer.
[3] The fiber according to [1] or [2], wherein an amount of phosphorus contained per 1 g of the fiber, as measured by a molybdenum blue method, is 0.001 mg or more and 10 mg or less.
[4] The fiber according to [1] or [2], wherein an amount of phosphorus contained per 1 g of the fiber, as measured by a molybdenum blue method, is 0.01 mg or more and 1 mg or less.
[5] The fiber according to any of [1] to [4], wherein the fiber has a fiber length of 1 mm or more and 200 mm or less, and preferably 5 mm or more and 100 mm or less.
[6] The fiber according to any of [1] to [4], wherein the fiber has a fiber length of 10 mm or more and 60 mm or less.
[7] A method for producing a fiber suitable as an additive to a cement paste, the method includes phosphorylating a non-phosphorylated ethylene-vinyl alcohol copolymer contained in a precursor fiber formed using the non-phosphorylated ethylene-vinyl alcohol copolymer.
[8] The method according to [7], further including cutting the precursor fiber to a fiber length of 1 mm or more and 200 mm or less, preferably 5 mm or more and 100 mm or less, and more preferably 10 mm or more and 60 mm or less, before phosphorylating the non-phosphorylated ethylene-vinyl alcohol copolymer.
[9] A method for producing a fiber suitable as an additive to a cement paste, the method including cutting a continuous fiber formed using a phosphorylated ethylene-vinyl alcohol copolymer to a fiber length of 1 mm or more and 200 mm or less, preferably 5 mm or more and 100 mm or less, and more preferably 10 mm or more and 60 mm or less.
[10] The method according to any of [7] to [9], wherein the fiber contains an ethylene-vinyl alcohol copolymer including a structural unit represented by Formula (1) described below. 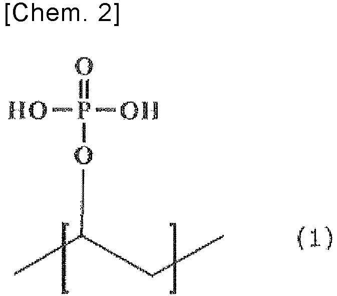
[11] The method according to any of [7] to [10], wherein an amount of phosphorus contained per 1 g of the fiber, as measured by a molybdenum blue method, is 0.001 mg or more and 10 mg or less, and may be 0.01 mg or more and 1 mg or less.
[12] A fiber produced by the method described in any of [7] to [11].
[13] Use of the fiber described in any of [1] to [6] and [12] as an additive to a cement paste.
[14] Use of the fiber described in any of [1] to [6] and [12] as a self-healing promoter for cracks in a cured cement body.
[15] A cement composition containing a powdered cement and the fiber described in any of [1] to [6] and [12].
[16] The cement composition according to [15], further containing an aggregate.
[17] A cement paste containing the fiber described in any of [1] to [6] and [12], a cement, and water.
[18] A mortar containing the cement paste described in [17] and an aggregate.
[19] A concrete containing the cement paste described in [17] and an aggregate.
[20] A cured cement body produced from the cement paste described in [17].

### Advantageous Effects of Disclosure

According to one embodiment of the present disclosure, there is provided a novel fiber which, when added to a cement paste, can promote the self-healing of cracks generated in a cured cement body produced from the cement paste.

### Description of Embodiments

The present disclosure will be described below with reference to embodiments for carrying out the present disclosure. However, the present disclosure is not limited to the embodiments described below.

In the present disclosure, an expression of "from X to Y" (with X and Y being any numerals) means "X or more and Y or less", unless otherwise specified.

In the present specification, for numerical ranges described in a stepwise manner, the upper limit value or the lower limit value of a numerical range of a certain step can be optionally combined with the upper limit value or the lower limit value of a numerical range of another step. In addition, in a numerical range described in the present specification, the upper limit value or the lower limit value of the numerical range can be replaced with a value shown in the Examples.

The fiber according to one embodiment of the present disclosure contains a structural unit of Formula (1) described below in an EVOH that forms the fiber.

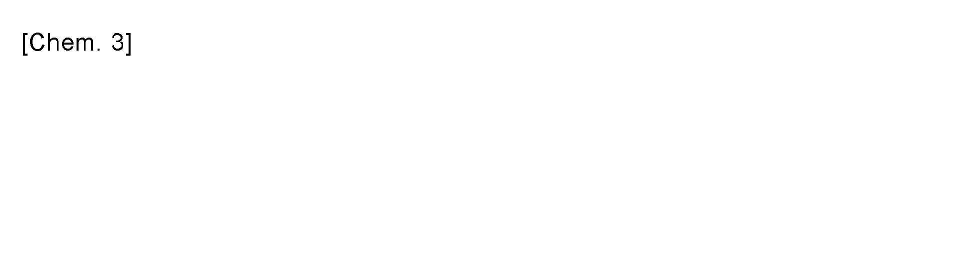

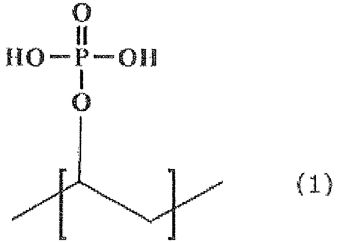

In the fiber according to the embodiment, the amount of phosphorus contained per 1 g of the fibers, as measured by the molybdenum blue method, is preferably 0.001 mg or more and 10 mg or less, more preferably 0.005 mg or more and 5 mg or less, still more preferably 0.01 mg or more and 1 mg or less, and particularly preferably 0.05 mg or more and 0.5 mg or less. When the content of phosphorus is equal to or more than the lower limit value described above, calcium ions are easily adsorbed on the fiber surface, and the ability to precipitate a self-healing substance such as calcium carbonate around the fiber tends to be excellent, whereas when the content of phosphorus is equal to or less than the upper limit value described above, water solubility does not become too high, and thus the fiber itself tends to be less likely to be eluted from the cured cement body.

The EVOH contained in the fiber according to the embodiment may be obtained by blending at least two types of EVOHs having different phosphorus contents and produced by different processes, and one of the EVOHs may be an EVOH containing no phosphorus.

### Non-Phosphorylated EVOH

The EVOH containing the structural unit of Formula (1) and contained in the fiber according to the embodiment can be obtained by phosphorylating a non-phosphorylated EVOH. Hereinafter, the non-phosphorylated EVOH used for the production of the EVOH that includes the structural unit of Formula (1) and is contained in the fiber according to the embodiment may be referred to as an EVOH (A).

The EVOH (A) is a thermoplastic polymer obtained by saponifying an ethylene-vinyl acetate copolymer, which is a copolymer of ethylene and vinyl acetate, and is water-insoluble.

The copolymerization of ethylene and vinyl acetate can be carried out by any known polymerization method, for example, solution polymerization, suspension polymerization, or emulsion polymerization, and solution polymerization using methanol as a solvent is generally used. Saponification of the resulting ethylene-vinyl acetate copolymer can also be carried out by a known method.

The EVOH (A) produced in this manner is mainly composed of an ethylene unit and a vinyl alcohol unit, and when the saponification degree is less than 100 mol%, the EVOH (A) contains a small amount of a remaining vinyl unit.

The content of the ethylene unit in the EVOH (A) as measured in accordance with ISO 14663 is usually 20 mol% or more and 60 mol% or less, preferably 20 mol% or more and 55 mol% or less, and more preferably 25 mol% or more and 50 mol% or less. When the content is equal to or more than the lower limit value, the thermal stability tends to be excellent during fiber molding, and particularly during melt spinning. When the EVOH (A) in which the content is equal to or less than the upper limit value is used, the fiber according to the embodiment tends to have an excellent ability to precipitate a self-healing substance such as calcium carbonate around the fiber. The content of the ethylene unit in the EVOH (A) can be controlled by the pressure of ethylene when vinyl acetate and ethylene are copolymerized.

The saponification degree of the EVOH (A) as measured in accordance with JIS K6726 (provided that the EVOH (A) is uniformly dissolved in a water/methanol solvent to form a solution) is usually 90 mol% or more and 100 mol% or less, preferably 95 mol% or more and 100 mol% or less, and more preferably 99 mol% or more and 100 mol% or less. When the saponification degree is within the above range, the thermal stability during melt spinning tends to be excellent. The saponification degree can be controlled by factors such as the temperature, the time, and the amount of a saponification catalyst (an alkaline catalyst such as sodium hydroxide is typically used) when the ethylene-vinyl acetate copolymer is saponified.

The melt flow rate (MFR) (210°C, load of 2160 g) of the EVOH (A) is usually 0.1 g/10 minutes or more and 300 g/10 min or less, preferably 0.5 g/10 minutes or more and 250 g/10 minutes or less, and more preferably 1 g/10 minutes or more and 200 g/10 minutes or less. When the MFR is equal to or more than the lower limit value, the melt viscosity remains at an appropriate level, and spinning tends to be facilitated. When the MFR is equal to or less than the upper limit value, the tension during melt spinning remains at an appropriate level, and stable melt spinning tends to be facilitated.

The MFR is an indicator of the degree of polymerization of the EVOH (A) and can be adjusted by the amount of a polymerization initiator or the amount of a solvent used when ethylene and vinyl acetate are copolymerized.

The EVOH (A) may further contain, within such a range that does not impair the effects of the present disclosure (for example, 10 mol% or less of the EVOH (A)), a comonomer unit derived from a comonomer described below.

Examples of the comonomer include olefins such as propylene, 1-butene, and isobutene; hydroxyl group-containing α-olefins such as 3-buten-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group with 1 to 18 carbons; acrylamides such as acrylamide, N-alkylacrylamides having an alkyl group with 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group with 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers having an alkyl group with 1 to 18 carbons, such as alkyl vinyl ethers, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. These may be used alone or in combination of two or more types.

The EVOH (A) may be post-modified as long as the effects of the present disclosure are not impaired. Examples of the post-modification include urethanization, acetalization, cyanoethylation, and oxyalkylenation.

The EVOH (A) may be a mixture of two or more types of EVOHs, for example, EVOHs having different degrees of saponification, EVOHs having different degrees of polymerization, and EVOHs having different copolymerization components.

### Fiber Production Method

The following two methods are typical examples of methods for producing the fiber according to the embodiment using the EVOH (A) as a starting material.

First method: a method including a step of forming a precursor fiber using an EVOH (A), and a subsequent step of phosphorylating the EVOH (A) contained in the precursor fiber to produce the fiber according to the embodiment.

Second method: a method including a step of phosphorylating an EVOH (A) to produce a phosphorylated EVOH, and a subsequent step of forming the fiber according to the embodiment using the phosphorylated EVOH.

The first method will be described below with the method divided into the step of forming a precursor fiber using the EVOH (A) and the step of phosphorylating the EVOH (A) contained in the precursor fiber.

### Step of Forming Precursor Fiber from EVOH (A)

The precursor fiber is formed by forming a fiber from the EVOH (A) or a composition thereof.

The composition of the EVOH (A) is a composition obtained by blending one or two or more additives with the EVOH (A) in such a range that does not impair the object of the present disclosure (for example, 5 parts by mass or less per 100 parts by mass of the EVOH (A)).

Examples of the additive include lubricants, inorganic salts (for example, hydrotalcite), plasticizers, heat stabilizers, light stabilizers, antioxidants, ultraviolet absorbers, colorants, antistatic agents, surfactants, antibacterial agents, antiblocking agents, slip agents, fillers (for example, inorganic fillers), and other resins (for example, polyolefins and polyamides).

The method for forming a fiber from the EVOH (A) or the composition thereof is not particularly limited, and examples thereof include melt spinning, wet spinning, and dry spinning. Among these, melt spinning is preferably used because the spinning speed is high and split fibers are easy to spin.

The melt spinning method is not particularly limited, and melt spinning is carried out from a single nozzle or a composite nozzle of a known melt spinning machine. The spinning is carried out at a temperature at which the EVOH (A) melts but is not deteriorated, and the EVOH (A) is extruded at a spinning temperature of from 200 to 320°C to produce spun filaments having a predetermined fiber fineness.

### Step of Phosphorylating EVOH (A) Contained in Precursor Fiber

The EVOH (A) contained in the precursor fiber can be phosphorylated using a reaction that has been used in the related art for producing a phosphate ester of an organic hydroxy compound. That is, by reacting the EVOH (A) contained in the precursor fiber with polyphosphoric acid, phosphorus oxychloride, or phosphorus pentoxide, some of the vinyl alcohol units contained in the EVOH (A) can be converted into the structural unit of Formula (1).

The phosphorylation reaction is preferably carried out by contacting the precursor fiber with a solution in which the above-mentioned phosphorus compound (polyphosphoric acid, phosphorus oxychloride, or phosphorus pentoxide) is dissolved in a solvent that does not react with the phosphorus compound.

The content of the phosphorus compound relative to the solvent is usually 0.1 mass% or more, preferably 1.0 mass% or more, more preferably 5.0 mass% or more, still more preferably 7.0 mass% or more, and particularly preferably 9.0 mass% or more. The upper limit value is usually 30 mass% or less, preferably 25 mass% or less, more preferably 20 mass% or less, and even more preferably 15 mass% or less. When the content of the phosphorus compound is within the above range, the EVOH (A) can be phosphorylated.

In the above-mentioned second method, the EVOH (A) is phosphorylated before being formed into a fiber, whereby some of the hydroxyl groups of the EVOH (A) are converted into phosphate groups. For details on the technique that can be used in the second method for phosphorylation of the EVOH (A), reference can be made to the following document, for example.
· "Influence of covalently bound phosphorus-containing groups on the flammability of poly(vinyl alcohol), poly(ethylene-co-vinyl alcohol) and low-density polyethylene," M. Banks, et. al, POLYMER, 34 (1993), pp. 4547-4556

In the second method, the fiber according to the embodiment is produced by forming a fiber from an EVOH containing a phosphorylated EVOH obtained using the EVOH (A), or from a composition thereof. The EVOH containing the phosphorylated EVOH obtained using the EVOH (A) may be a mixture of the phosphorylated EVOH obtained using the EVOH (A) and a non-phosphorylated EVOH.

### Characteristics of Fiber According to Embodiment

The fiber diameter of the fiber according to the embodiment is not particularly limited, but is usually 0.1 µm or more and 100 µm or less, preferably 0.1 µm or more and 50 µm or less, and more preferably 0.1 µm or more and 30 µm or less. When the fiber diameter is within the above range, the fiber surface area increases, and the ability to precipitate the self-healing substance per unit volume is improved. The term fiber diameter as used herein refers to the filament diameter. The same applies to other sections of the present specification, and the fiber diameter means the filament diameter.

The fiber length of the fiber according to the embodiment is not particularly limited, but is usually 1 mm or more and 200 mm or less, preferably 5 mm or more and 100 mm or less, and more preferably 10 mm or more and 60 mm or less. When the fiber length is within the above range, the mechanical strength of a cured cement body containing the fiber can be improved without hindering the handling ease of the cement paste to which the fiber is added.

The fiber can be cut to a fiber length within the above range either before or after phosphorylation.

### Application

The fiber according to the embodiment can be used as an additive to a cement paste.

The cement paste is obtained by adding water to a cement and kneading the mixture.

The cement is a powdered composition, and typically contains quicklime, silica, alumina, iron oxide, magnesium oxide, and gypsum as components.

When a crack occurs in a cured cement body obtained from the cement paste to which the fiber according to the embodiment is added, a self-healing substance such as calcium carbonate is likely to precipitate in the crack, and thus the crack is spontaneously closed in a relatively short time. In other words, the fiber according to the embodiment functions as a self-healing promoter for cracks in the cured cement body.

When the fiber according to the embodiment is added to the cement paste, the amount of the fiber per 100 parts by mass of the cement may be 0.001 parts by mass or more, 0.005 parts by mass or more, 0.01 parts by mass or more, 0.05 parts by mass or more, 0.1 parts by mass or more, 0.5 parts by mass or more, 1 part by mass or more, or 1.5 parts by mass or more, and may be 60 parts by mass or less, 50 parts by mass or less, 40 parts by mass or less, 30 parts by mass or less, 20 parts by mass or less, 10 parts by mass or less, 5 parts by mass or less, 4 parts by mass or less, or 3 parts by mass or less. The content of the fiber according to the embodiment per 100 parts by mass of the cement is preferably from 0.1 to 10 parts by mass, more preferably from 0.5 to 6 parts by mass, and further preferably from 1 to 4 parts by mass, because at such a content, self-healing of cracks generated in a cured body obtained from the cement paste can be promoted without significantly impairing the strength of the cured body.

A mortar can be produced by kneading a fine aggregate such as sand into a cement paste to which the fiber according to the embodiment has been added. Alternatively, a concrete can be produced by kneading a fine aggregate such as sand and a coarse aggregate such as gravel into a cement paste to which the fiber according to the embodiment has been added.

A cured body of the mortar or the concrete has a structure in which the cured cement body containing the fiber according to the embodiment acts as a binder to bond the aggregates together, and therefore even if a crack occurs, the crack is closed in a relatively short time. This is because even in a cured body of the mortar or the concrete, cracks are generated in a portion of the cured cement body contained in the mortar or the concrete.

In one example, the cement paste to which the fiber according to the embodiment is added is prepared by mixing the fiber with a cement and water immediately before use.

In another example, a cement composition containing a powdered cement and the fiber according to the embodiment is prepared in advance, and whenever necessary, a cement paste is produced by adding water to the cement composition.

In both examples, an aggregate may be further mixed with the produced cement paste to yield a mortar or a concrete.

In one example, the mortar containing the cement paste to which the fiber according to the embodiment has been added may be produced by adding water to a cement composition containing a powdered cement, the fiber according to the embodiment, and a fine aggregate, with the cement composition being prepared in advance.

In one example, the concrete containing the cement paste to which the fiber according to the embodiment has been added may be produced by adding water to a cement composition containing a powdered cement, the fiber according to the embodiment, a fine aggregate, and a coarse aggregate, with the cement composition being prepared in advance.

The cement composition containing the powdered cement, the fiber according to the embodiment, the fine aggregate, and the coarse aggregate may optionally contain one or two or more admixtures in addition to these components. Examples of the admixture include inorganic fine powder admixtures such as blast furnace slag, fly ash, and silica fume; water reducers such as an AE water reducer, a high performance water reducer, and a high performance AE water reducer; AE agents, foaming agents, expanding agents, and coagulation rate regulators.

The cement paste containing the fiber according to the embodiment, or the mortar and concrete produced using the cement paste can be used not only for manufacturing a structure but also for repairing a cured concrete. Specifically, the cement paste, the mortar, or the concrete can be used to fill cracks generated in a cured concrete or to coat a deteriorated surface of a cured concrete.

### Examples

The results of experiments conducted by the present inventors are described below.

### Experiment 1

### Production of EVOH Fibers

Water-containing EVOH pellets having an ethylene content of 38 mol%, an MFR of 50 g/10 minutes (at 210°C and a load of 2160 g), and a saponification degree of 99.7 mol% were immersed for 2.5 hours in an aqueous solution containing 250 ppm of sodium acetate, 260 ppm of sodium dihydrogen phosphate, and 170 ppm of acetic acid, and then washed with water and dried, after which the resultant material was used to form monofilament fibers through a melt spinning method. When observed with a scanning electron microscope (SEM), the diameter (fiber diameter) of the formed fibers was approximately 27 µm.

### Preparation of Phosphorylated EVOH Fibers

Phosphorylated EVOH fibers were prepared by cutting the EVOH fibers formed by the above procedure to a fiber length of 51 mm, and then subjecting them to a phosphorylation treatment in the following manner.

First, 40 mL of tributylamine and 13.5 g of polyphosphoric acid were added to and dissolved in 100 mL of a mixed solvent (boiling point: 90°C) obtained by mixing acetonitrile and DMSO at a volume ratio of 7:3 (acetonitrile : DMSO). Next, 2 g of EVOH fibers was added to the solution, and the mixture was heated and stirred under reflux using a hot stage.

Subsequently, the EVOH fibers were removed from the reaction container and washed with distilled water to remove unreacted polyphosphoric acid, to thereby produce phosphorylated EVOH fibers.

### Phosphorus Content

The amount of phosphorus contained in the phosphorylated EVOH fibers was measured by the molybdenum blue method. An ascorbic acid solution was prepared by mixing 1.0 g of ascorbic acid available from FUJIFILM Wako Pure Chemical Corporation with 5.0 mL of pure water and 5.0 mL of 4.5 M dilute sulfuric acid. In addition, a molybdic acid solution was prepared by mixing 0.5 g of ammonium molybdate available from FUJIFILM Wako Pure Chemical Corporation, 6.0 mL of pure water, 0.02 g of antimony potassium tartrate available from FUJIFILM Wako Pure Chemical Corporation, and 14 mL of 4.5 M dilute sulfuric acid. The prepared ascorbic acid solution and molybdic acid solution were added to 1 g of the phosphorylated EVOH fibers, and the mixture was allowed to stand for 5 minutes to develop color. Subsequently, the light absorbance at 883 nm was measured using a spectrophotometer (U-1900, available from Hitachi, Ltd.), and the amount of phosphoric acid (mg) per 1 g of the EVOH fibers was measured. The results are shown in Table 1 below.

### Evaluation of Self-Healing Property of Cured Body of Cement Composition

A household cement (CCG1.3, available from Sunhome Kogyo K. K.) and pure water were mixed at a mass ratio of 5:1 to prepare a cement paste, and the cement paste was further mixed with EVOH fibers to prepare a cement paste composition containing 2 parts by mass of the EVOH fibers per 100 parts by mass of the cement paste composition. The cement paste composition was then cured in pure water at 20°C for 7 days to form a cured body of the cement composition.

Next, the cured body was hit with a hammer to form cracks having a width of about 60 to 70 µm in the cured body. The cured body was then immersed in pure water and allowed to stand, and the degree of self-healing of the cracks was examined. Specifically, the cured body was removed from the water 3 days after the immersion and 7 days after the immersion, and the periphery of the cracks was observed with an optical microscope.

The results are shown in Table 1. The symbols shown in Table 1 have the following meanings.
×: Cracks were not closed for the most part.
△: Cracks were partially closed.
○: Cracks were completely closed.

### Evaluation of Calcium Carbonate Adherence

The EVOH fibers exposed in the cracks in the cured body of the cement composition used in the evaluation of the self-healing property were observed using a stereo microscope, and whether calcium carbonate was adhered to the fiber surface was visually confirmed.

The results are shown in Table 1. The symbols shown in Table 1 have the following meanings.
×: No adherence
○: Adherence was observed

### Experiment 2

Phosphorylated EVOH fibers were produced in the same manner as in Experiment 1, except that phosphoryl chloride (POCl₃) was used as the phosphorylating agent instead of polyphosphoric acid.

Specifically, 16.4 g of sodium hydroxide was added to a reaction container containing 2 g of EVOH fibers and 200 mL of ion-exchanged water, and the mixture was stirred overnight at normal temperature, after which 7.5 mL of phosphoryl chloride was added to the reaction container and the mixture was stirred for 6 hours while cooling so that the temperature of the reaction liquid did not exceed 20°C.

Subsequently, the EVOH fibers were removed from the reaction container and washed with distilled water to remove unreacted polyphosphoric acid, to thereby produce phosphorylated EVOH fibers.

The produced phosphorylated EVOH fibers were then used to measure the phosphorus content, and to evaluate the self-healing property of a cured body of the cement composition and the calcium carbonate adherence in the same manner as in Experiment 1. The results are shown in Table 1.

### Experiment 3

The self-healing property of a cured body of the cement composition and the calcium carbonate adherence were evaluated in the same manner as in Experiment 1, except that the EVOH fibers were used without being subjected to the phosphorylation treatment. The results are shown in Table 1.

### Experiment 4

The self-healing property of a cured body of the cement composition was evaluated in the same manner as in Experiment 1, except that the EVOH fibers were not used. The results are shown in Table 1.

**[Table 1]**

| | EVOH fibers | Phosphorus content (mg/1 g of fiber) | Calcium carbonat e adheren ce | Self-healing of cracks | |
|---|---|---|---|---|---|
| | | | | After 3 days | After 7 days |
| Experiment 1 | Phosphorylated EVOH fibers | 0.13 (0.016 mol%) | ○ | △ | ○ |
| Experiment 2 | Phosphorylated EVOH fibers | 0.11 (0.014 mol%) | ○ | △ | ○ |
| Experiment 3 | Non-phosphorylated EVOH fibers | 0 | × | × | △ |
| Experiment 4 | Not used | 0 | - | × | × |

From comparison of Experiments 1 and 2 with Experiment 3, it is found that calcium carbonate is more likely to adhere onto the phosphorylated EVOH fibers than onto the non-phosphorylated EVOH fibers.

Further, from comparison of Experiments 1 and 2 with Experiment 3, it is found that the phosphorylated EVOH fibers have a higher ability to promote self-healing of cracks generated in the cured body when added to the cement composition, as compared with the non-phosphorylated EVOH fibers.

The present disclosure has been described based on specific embodiments above. However, each embodiment has been presented as an example and does not limit the scope of the present disclosure. Each embodiment described in the present specification can be modified in various ways within a scope in which the effect of the disclosure is exhibited, and can be combined, within a practical range, with a feature disclosed by another embodiment.

Specific embodiments of the present disclosure have been described in the above examples, but the above examples are merely illustrative and are not to be construed as limiting. Various modifications apparent to those skilled in the art are intended to be within the scope of the present disclosure.

### Industrial Applicability

The fiber according to an embodiment of the present disclosure can be suitably used as an additive to a cement paste and as a self-healing promoter for cracks in a cured cement body.

## Claims

1. A fiber comprising an ethylene-vinyl alcohol copolymer including a structural unit represented by Formula (1) described below:

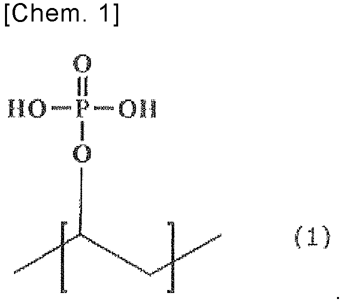

2. A fiber comprising a phosphorylated ethylene-vinyl alcohol copolymer.

3. The fiber according to claim 1 or 2, wherein an amount of phosphorus contained per 1 g of the fiber, as measured by a molybdenum blue method, is 0.001 mg or more and 10 mg or less.

4. The fiber according to claim 1 or 2, wherein an amount of phosphorus contained per 1 g of the fiber, as measured by a molybdenum blue method, is 0.01 mg or more and 1 mg or less.

5. The fiber according to claim 1 or 2, wherein the fiber has a fiber length of 1 mm or more and 200 mm or less.

6. The fiber according to claim 1 or 2, wherein the fiber has a fiber length of 10 mm or more and 60 mm or less.

7. A method for producing a fiber suitable as an additive to a cement paste, the method comprising phosphorylating a non-phosphorylated ethylene-vinyl alcohol copolymer contained in a precursor fiber formed using the non-phosphorylated ethylene-vinyl alcohol copolymer.

8. The method according to claim 7, further comprising cutting the precursor fiber to a fiber length of 1 mm or more and 200 mm or less before phosphorylating the non-phosphorylated ethylene-vinyl alcohol copolymer.

9. A method for producing a fiber suitable as an additive to a cement paste, the method comprising cutting a continuous fiber formed using a phosphorylated ethylene-vinyl alcohol copolymer to a fiber length of 1 mm or more and 200 mm or less.

10. The method according to claim 7 or 9, wherein the fiber comprises an ethylene-vinyl alcohol copolymer including a structural unit represented by Formula (1) described below:

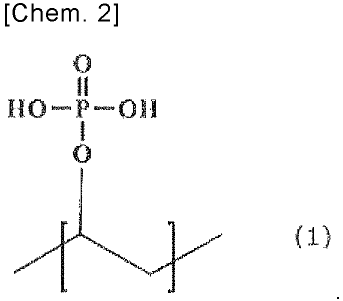

11. The method according to claim 7 or 9, wherein an amount of phosphorus contained per 1 g of the fiber, as measured by a molybdenum blue method, is 0.001 mg or more and 10 mg or less.

12. A fiber produced by the method described in claim 7 or 9.

13. Use of the fiber described in claim 1 or 2 as an additive to a cement paste.

14. Use of the fiber described in claim 1 or 2 as a self-healing promoter for cracks in a cured cement body.

15. A cement composition comprising a powdered cement and the fiber described in claim 1 or 2.

16. The cement composition according to claim 15, further comprising an aggregate.

17. A cement paste comprising the fiber described in claim 1 or 2, a cement, and water.

18. A mortar comprising the cement paste described in claim 17 and an aggregate.

19. A concrete comprising the cement paste described in claim 17 and an aggregate.

20. A cured cement body produced from the cement paste described in claim 17.
